# EUROPÄISCHE PATENTSCHRIFT

(11) **EP 0 862 975 B1**
(45) Veröffentlichungstag und Bekanntmachung des Hinweises auf die Patenterteilung: **12.11.2003**
(21) Anmeldenummer: 98102156.1
(22) Anmeldetag: 07.02.1998
(51) Int. Cl.: B27D 1/08, B29C 63/04, B27D 5/00

(54) **Ummantelungsmaschine für längliche Werkstücke**
Apparatus for covering an elongate object
Dispositif de revêtement d'un corps allongé

(30) Priorität: 05.03.1997 DE 19708850
(43) Veröffentlichungstag der Anmeldung: 09.09.1998
(73) Patentinhaber: Wessel, Karl-Heinz, 32602 Vlotho (DE); MANTELPROFILWERK BERG GmbH, 33397 Rietberg (DE)
(72) Erfinder: Wessel, Karl-Heinz, 32602 Vlotho (DE)
(74) Vertreter: Elbertzhagen, Otto, Dipl.-Ing.

(56) Entgegenhaltungen:
- DE-A- 2 532 855
- DE-A- 2 947 641
- DE-C- 19 508 864

## Beschreibung

Die Erfindung bezieht sich auf eine Maschine zum Ummanteln von länglichen Werkstücken der im Gattungsbegriff des Patentanspruchs 1 näher bezeichneten Art.

Eine solche Maschine ist aus der DE 25 32 855 A1 bekannt. Hierbei sind die Halteringe in regelmäßiger Teilung in der Vorschubrichtung der Werkstücke fest am Maschinengestell angeordnet, folglich kann der Abstand einander benachbarter Halteringe nicht verändert werden. Bei breiteren Werkstükken oder schwierig zu führenden Beschichtungsmaterialien, wie Furnieren, muß man verfahrenstechnische Anpassungsmaßnahmen treffen, um an denjenigen Durchlaufstellen der Werkstücke, wo diffizile Werkstückkonturen von den Führungsund Andruckrollen nachgefahren werden müssen, die Dichte der Andruckrollen zu erhöhen. Man kann sich hierbei mit besonders ausgestalteten Haltearmen behelfen, die aus der von dem jeweiligen Haltering aufgespannten Ebene herausragen, damit können jedoch schwellende Biegemomente auf die Haltearme ausgeübt werden, die zum einen eine Überdimensionierung erfordern und zum anderen aufgrund dennoch auftretender Schwingungen eine unexakte Führung des Beschichtungsmaterials bedingen.

Der Erfindung liegt deshalb die Aufgabe zugrunde, eine Maschine der gattungsgemäßen Art zu schaffen, die eine größere Variabilität hinsichtlich der Positionierung der Andruckrollen zuläßt.

Diese Aufgabe wird bei einer Maschine der gattungsgemäßen Art nach der Erfindung durch die kennzeichnenden Merkmale des Patentanspruchs 1 gelöst.

Für die Erfindung ist wesentlich, den Abstand benachbarter Halteringe verändern zu können, um an denjenigen Stellen entlang der Vorschubvorrichtung die Rollendichte vergrößern zu können, an denen es um das Nachfahren schwieriger Längskonturen an den Werkstücken geht, wie insbesondere von engen Konkav- oder Konvexwölbungen. Besondere Vorteile bietet die neue Maschine dann, wenn die Halteringe am Maschinengestell auswechselbar angeordnet sind, um für die Beschichtung sich wiederholender Werkstückkonturen jeweils passende, konstant eingerüstete Haltering-Sätze bereitzuhalten. Gerade dann kann für jeden, für sich fest eingestellten Haltering eine bestimmte Längenposition an der Vorschubvorrichtung vorgegeben werden, was das Umrüsten einer Ummantelungsmaschine erheblich erleichtert.

Vorteilhafte Ausgestaltungsmerkmale der Erfindung ergeben sich aus den Unteransprüchen.

Die Erfindung wird nachfolgend anhand der Zeichnung an einem Ausführungsbeispiel noch näher erläutert. Dabei zeigen:
- Fig. 1: einen schematischen Querschnitt bzw. die Stirnansicht einer Ummantelungsmaschine,
- Fig. 2: eine vergrößerte, der Figur 1 entsprechende Darstellung der Maschine mit der entsprechend vergrößerten Stirnansicht eines der Halteringe und
- Fig. 3: die Seitansicht eines Teilabschnittes der Maschine nach Figur 1.

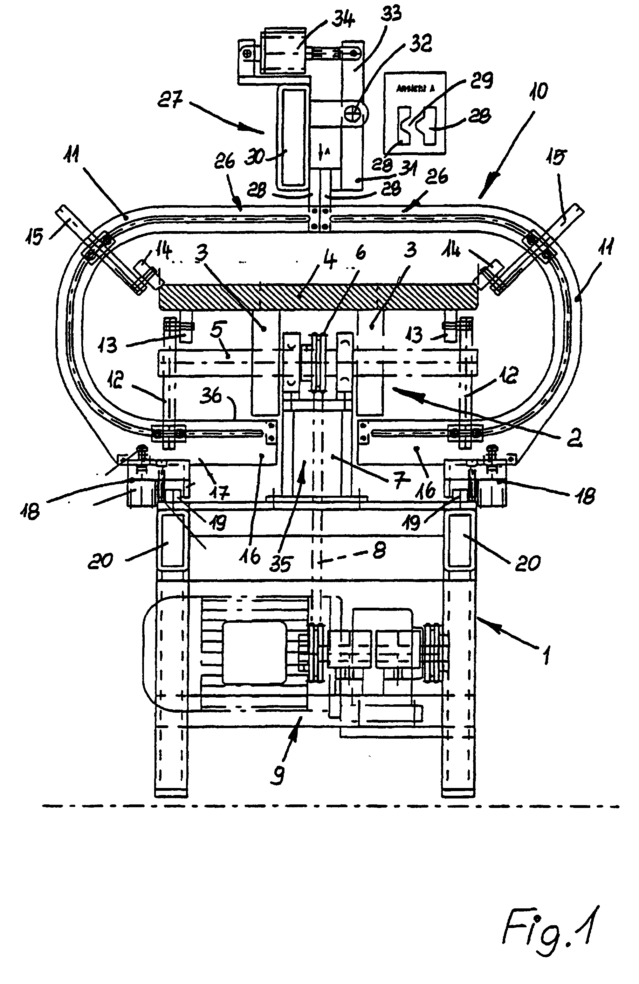

Figur 1 zeigt im einzelnen ein Maschinengestell 1, in dessen zentralem Bereich sich eine Vorschubvorrichtung 2 befindet, deren Vorschubrichtung senkrecht zur Darstellungsebene liegt. Auf dieser Vorschubvorrichtung 2 werden längliche Werkstücke in ihrer Längsrichtung befördert, die im Durchlauf mit einem in der Zeichnung nicht dargestellten Beschichtungsmaterial ummantelt werden, bei dem es sich vornehmlich um eine Folie oder ein Furnier handelt, welches mit den Werkstücken im Durchlauf verklebt wird, wobei von den Werkstücken das Beschichtungsmaterial mitgenommen und von einem Vorrat abgezogen wird.

In Figur 1 erkennt man ein solches Werkstück 4, bei dem es sich um ein längliches Brett, Paneel oder dergl. handeln kann. Das Werkstück 4 ist auf angetriebenen Vorschubrollen 3 aufgelagert, die in entsprechender Vielzahl in Vorschubrichtung hintereinander angeordnet sind. Die Vorschubrollen 3 sitzen auf Wellen 5, deren Achsen senkrecht zur Vorschubrichtung stehen. Die Wellen 5 sind an aufrechten Lagerkonsolen 7 angeordnet, die fußseitig auf dem Maschinengestell 1 aufstehen. Mittig zu diesen Lagerkonsolen 7 sind auf den Wellen 5 Antriebsräder 6 angeordnet, die über einen Ketten- oder Riementrieb 8 mit einem Zentralantrieb 9 verbunden sind, welcher sich im unteren Bereich des Maschinengestells 1 befindet. Der Ketten- oder Riementrieb 8 ist an den Lagerkonsolen 7 vorbeigeführt oder verläuft durch diese hindurch.

Auf dem Maschinengestell 1 sind Halteringe 10 so angeordnet, daß die jeweils von einem der Halteringe 10 aufgespannte Ebene senkrecht zu der Vorschubrichtung für die Werkstücke 4 steht. Die Halteringe 10 haben eine ovale Grundform, wobei die Längsachse dieser Ovalform parallel zur Querrrichtung der durch die Halteringe 10 hindurchbeförderten Werkstücke 4 liegt. In anderer Ausführung können die Halteringe auch eine Kreisform oder eine elliptische Gestalt haben, grundsätzlich ist die Form der Halteringe (10) beliebig, so daß auch Polygonformen in Betracht kommen können. Die Förderebene für die Werkstücke 4 liegt somit nahe bei dieser Längsachse der ovalen Halteringe 10, und der Durchmesser der Halteringen 10 in Richtung dieser Längsachse ist so gewählt, daß auch Werkstücke 4 größerer Breite mit genügendem Abstand von den Abschnitten der Halteringe 10 durch diese hindurchlaufen. Die in der Regel flachen Werkstücke 4 liegen auf der Vorschubvorrichtung 2 vornehmlich in einer Horizontalebene, entsprechend liegt die Längsachse der Halteringe 10 ebenfalls in Horizontalrichtung.

Die auf dem Maschinengestell 1 aufrechtstehenden Halteringe 10 sind je in zwei Ringhälften 11 unterteilt, die zueinander spiegelbildlich angeordnet sind. Die Symmetrieebene der Ringhälften 11 ist diejenige Vertikalebene, die entlang der Längsmitte des Maschinengestells 1 verläuft. Die Ringhälften 11 haben an ihren Stirnseiten Befestigungskonturen für Stützarme 12, die unterhalb der Förderebene für die Werkstücke 4 angeordnet sind und an ihren Oberenden Stützrollen 13 tragen, die zur seitlichen Abstützung besonders breiter Werkstücke 4 dienen. Außerdem können die Stützrollen 13 dazu dienen, das an die Werkstücke 4 angefahrene Beschichtungsmaterial anzudrücken. Die gleiche Aufgabe erfüllen Andruckrollen 14, die auch hier nur in einer an den Werkstükken 4 anliegenden Position gezeigt sind, die aber auch in Abstand von den Werkstücken 4 positioniert sein können, um das bahnförmige Beschichtungsmaterial an die Werkstücke 4 heranzuführen. Die Andruckrollen 14 sitzen an verstellbaren Haltearmen 15, die in gleicher Weise wie die Stützarme 12 an den Halteringen 10 lösbar befestigt sind.

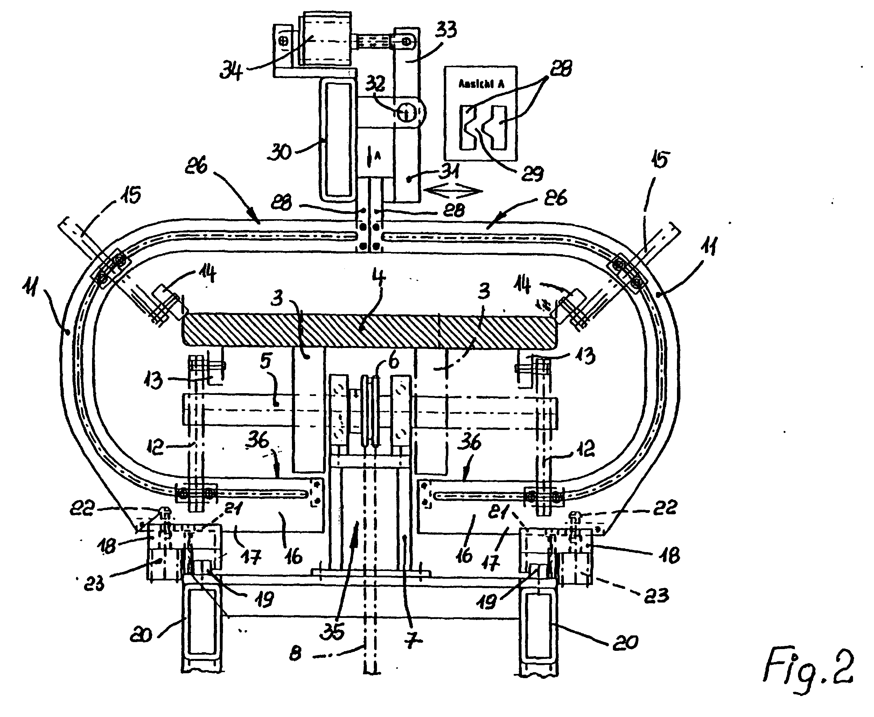

Die Halteringe 10 haben untere Abschnitte 16 mit daran angeordneten oder ausgebildeten Spannabschnitten 17, bei denen es sich beispielsweise um ein Schwalbenschwanzprofil handeln kann. Mit den horizontal ausgerichteten Spannabschnitten 17 sind die Ringhälften 11 auf Supporte 18 aufgesetzt, die dazu an ihrer Oberseite eine entsprechende Querführung 21 haben, vgl. hierzu Figur 2. Die Querführungen 21 verlaufen senkrecht zur Vorschubrichtung der Werkstücke 4, so daß durch diese die Ringhälften 11 mit ihren Spannabschnitten 17 soweit in Richtung zur Vorschubvorrichtung 2 hindurchgeschoben werden können bis sie mit den freien Innenenden ihrer unteren Abschnitte 16 bis dicht an die Lagerkonsolen 7 heranreichen, soweit es zumindest die Verbindungsebenen der Außenseiten der Lagerkonsolen 7 betrifft. Hierbei belassen die freien Enden der Unterabschnitte 16 der Ringhälften 11 zwischen sich eine Durchtrittslücke 35 für die Lagerkonsolen 7, denn die Besonderheit der gesamten Halteringe 10 bzw. deren Ringhälften 11 besteht darin, daß sie in der Förderrichtung der Werkstücke 4 auf dem Maschinengestell 1 längsverschieblich aufgelagert sind und bei einem entsprechenden Verschieben nicht mit den Lagerkonsolen 7 kollidieren dürfen.

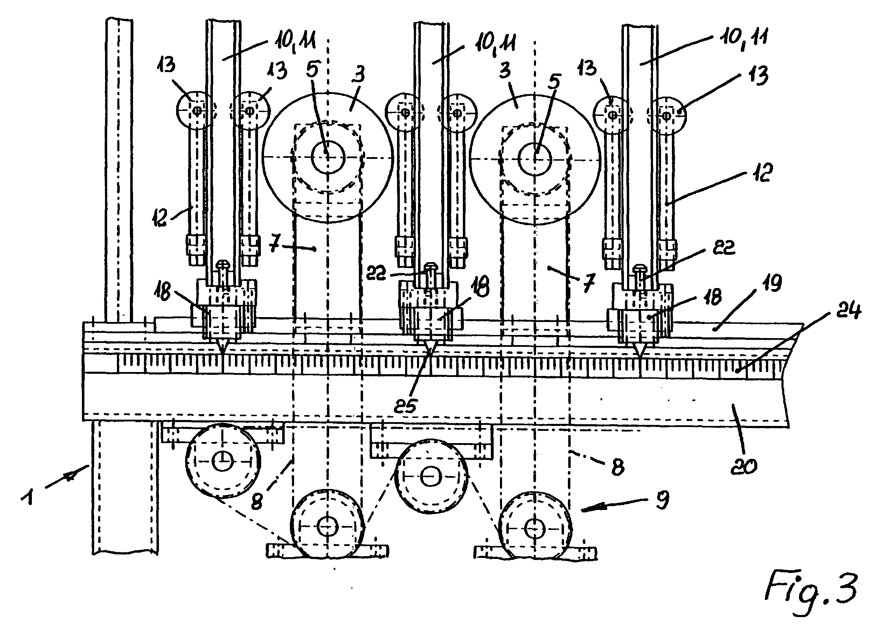

Dementsprechend sind die die Ringhälften 11 tragenden Supporte 18 auf parallel zur Vorschubrichtung der Werkstücke 4 angeordneten Schienen 19 gelagert, gegen die sie zur Sicherung der Position verspannt werden können. Die Schienen 19 verlaufen auf Längstraversen 20 des Maschinengestells 1, wobei, wie Figur 3 wiedergibt, an den Schienen 19 oder an den Längstraversen 20 eine Skala 24 mit einer Maßeinteilung angeordnet ist, um die Position der einzelnen Halteringe 10 bzw. Ringhälften 11 in Längsrichtung der Maschine bestimmen zu können. Dazu haben die Supporte 18 Positionsanzeiger 25, die auf die Skala 24 ausgerichtet sind.

Die Supporte 18 sind mit einer Schnellspanneinrichtung für die Ringhälften 11 ausgestattet, die einen in den Unterabschnitt 16 der jeweiligen Ringhälfte 11 eingreifenden Fixierbolzen 22 aufweist, welcher über einen Pneumatikzylinder 23 betätigt wird. Dies ermöglicht es, die Ringhälften 11 auf den Supporten 18 mit einfacher Handhabung austauschen zu können.

Die Ringhälften 11 der Halteringe 10 werden über die Stützrollen 13 und Stützarme 12 sowie die Andruckrollen 14 und die Haltearme 15 in Vorschubrichtung der Werkstücke 4 beaufschlagt, weshalb an den Oberschnitten 26 der Ringhälften 11 eine Verriegelungsvorrichtung 27 angeordnet ist, um die gegeneinanderstehenden Enden der Oberabschnitte 26 durch Formschluß miteinander zu sichern. Dazu sind an den Oberabschnitten 26 der Ringhälften 11 nach oben vorstehende Pratzen 28 vorgesehen, die - wie die herausgezogene Teilansicht "A" verdeutlicht - an ihren gegeneinander zur Anlage bringbaren Seiten formschlüssig ineinandergreifende Konturen 29 nach Art von Nut und Feder haben. Die Pratzen 28 können an ihren voneinander abliegenden Seiten beaufschlagt werden, um sie gegeneinander zu pressen. Dazu ist eine feststehende Schiene 30 und eine relativ dazu bewegbare Spannschiene 31 vorgesehen, die somit eine Spannvorrichtung für die Pratzen 28 bilden. Die Spannschiene 31 ist um eine festliegende Achse 32 kippbar, wozu ihre von der Pratze 28 abliegende Längsseite 33 mit einem Hilfsantrieb 34 verbunden ist. Die feststehende Schiene 30 und die Spannschiene 31 erstrecken sich über sämtliche Ringhälften 11 der Halteringe 10 hinweg, die somit unabhängig von der jeweils eingestellten Position in Längsrichtung der Maschine im Bereich ihrer Oberabschnitte 26 jeweils gegeneinander gesichert werden können.

Soweit es die Vorschubvorrichtung 2 mit den auf den Wellen 5 angeordneten Vorschubrollen 3 betrifft, machen die Figuren 1 und 2 durch die in der rechten Hälfte strichpunktierte Darstellung deutlich, daß für die Ummantelung schmalerer Werkstücke die Wellen 5 gegen kürzere Wellen ausgetauscht werden können oder auch unterschiedlich positionierbar sind. So können an den Lagerkonsolen 4 Hohlwellen angeordnet sein, in denen die Wellen 5 gelagert sind und durch eine Fixierschraube oder eine andere Arretiervorrichtung in ihrer vorbestimmten Lage festgehalten werden. Nach Lösen dieser Arretiervorrichtung können die Wellen 5 verschoben oder auch ausgetauscht werden, damit jeweils Wellen mit passender Länge zum Einsatz kommen. Ebenfalls ist es möglich, die Wellen 5 asymmetrisch zur Lagerkonsole 7 anzuordnen, sie also über die Lagerkonsole 7 an beiden Seiten unterschiedlich lang vorstehen zu lassen. Die jeweilige Länge der Wellen 5 richtet sich nach der Breite der jeweils zu ummantelnden Profile. Entsprechend wird auch die Anordnung der Stützrollen 13 mit ihren Stützarmen 12 und der Andruckrollen 14 mit ihren Haltearmen 15 vorgesehen. Diese Rollen 13, 14 sind nur in den Bereichen der Werkstücke erforderlich, wo eine Bahn des Beschichtungsmaterials herangeführt und an die Werkstücke angedrückt werden muß. Zum anderen kann auch die Anzahl der Vorschubrollen 3 oder deren Breite variiert werden, um die Werkstücke 4 sicher zu transportieren, die in aller Regel noch mit einem Oberdruck beaufschlagt werden, der ein Gleiten der Werkstücke auf den Vorschubrollen 3 verhindert. Ein solcher Oberdruck ist in der Zeichnung nicht wiedergegeben.

Die Ringhälften 11 bzw. die Halteringe 10 mit ihren unteren Abschnitten 16 untergreifen die Vorschubrollen 3, entsprechend halten die Innenseiten 36 der Unterabschnitte 16 der Ringhälften 11 einen Abstand von derjenigen Ebene, die durch die unteren Scheitellinien der Vorschubrollen 3 aufgespannt wird.

## Patentansprüche

1. Maschine zum Ummanteln von länglichen Werkstücken (4), wie Leisten, Bretter, Paneele oder dergl., mit einem bandförmigen Beschichtungsmaterial, wie einer Folie oder einem Furnier, mit einer die Werkstücke tragenden, diese in deren Längsrichtung fördernden Vorschubvorrichtung (2), die zumindest entlang eines geradlinigen Abschnittes von einer Mehr- oder Vielzahl in der Vorschubrichtung hintereinander angeordneter Halteringe (10) umgeben ist, die jeweils mit den von ihnen aufgespannten Ebenen senkrecht zur Vorschubrichtung stehen und an denen nach innen hin Haltearme (15) mit daran gelagerten Andruckrollen (14) zum Heranführen und/oder Andrücken des Beschichtungsmaterials an die Werkstücke vorstehen, welches von den durch Halteringe hindurchlaufenden Werkstücken mitgenommen wird,
**dadurch gekennzeichnet,**
**daß** die Halteringe (10) in der Vorschubrichtung der Werkstücke (4) verschieblich angeordnet sind.

2. Maschine nach Anspruch 1,
**dadurch gekennzeichnet,**
**daß** die Halteringe (10) auf Supporten (18) angeordnet sind, die auf einer zur Vorschubrichtung (2) parallelen Schiene (19) verschiebbar sowie dagegen arretierbar sind.

3. Maschine nach Anspruch 2,
**dadurch gekennzeichnet,**
**daß** die Halteringe (10) je aus zueinander spiegelbildlich angeordneten Ringhälften (11) bestehen, die je für sich auf einem Support (18) angeordnet sind.

4. Maschine nach Anspruch 3,
**dadurch gekennzeichnet,**
**daß** jeder Support (18) an seiner Oberseite eine Querführung (21) zur spannbaren und lösbaren Aufnahme eines unterseitigen Spannabschnittes (17) an den Ringhälften (11) hat.

5. Maschine nach einem der Ansprüche 2 bis 4,
**dadurch gekennzeichnet,**
**daß** parallel neben der Schiene (19) für die Supporte (18) eine Skala (24) mit Maßmarkierungen angeordnet ist und die Supporte (18) darauf ausgerichtete Positionsanzeiger (25) haben.

6. Maschine nach einem der Ansprüche 3 bis 5,
**dadurch gekennzeichnet,**
**daß** die Ringhälften (11) der Halteringe (10) an der Nahtstelle ihrer Oberabschnitte (26) eine Verriegelungseinrichtung (27) zum Sichern der Ringhälften (11) gegeneinander haben.

7. Maschine nach Anspruch 6,
**dadurch gekennzeichnet,**
**daß** die Veriegelungseinrichtung (27) der Ringhälften daran vorstehende Pratzen (28) aufweist, die in der Verriegelungslage formschlüssig ineinandergreifende Konturen (29) haben, deren Formschluß in Vorschubrichtung wirkt.

8. Maschine nach Anspruch 6 oder 7,
**dadurch gekennzeichnet,**
**daß** oberhalb der Ringhälften (11) eine deren Pratzen (28) in der Verriegelungslage gegeneinander drückende Spannvorrichtung (30, 31) angeordnet ist.

9. Maschine nach Anspruch 8,
**dadurch gekennzeichnet,**
**daß** die Spannvorrichtung (30, 31) der Verriegelungseinrichtung (27) die Pratzen (28) in der Verriegelungslage beaufschlagende, relativ zueinander bewegliche Spannschienen hat, die sich über mehrere oder alle hintereinanderliegenden Halteringe (10) hinweg erstrecken.

10. Maschine nach einem der Ansprüche 1 bis 9,
**dadurch gekennzeichnet,**
**daß** die Vorschubvorrichtung (2) aus in Vorschubrichtung hintereinanderliegenden Vorschubrollen (3) besteht, die jeweils auf einer quer zur Vorschubrichtung liegenden Welle (5) angeordnet sind, welche an einer an der durch die Halteringe (10) hindurch sich erstreckenden Mittenebene angeordneten Lagerkonsole (7) gelagert ist und in deren Bereich ein Antriebsrad (6) hat, das mittels eines Ketten- oder Riementriebes (8) mit einem Zentralantrieb (9) gekuppelt ist, wobei die Halteringe (10) bzw. die Ringhälften (11) untere Abschnitte (16) mit einer dazwischen freigelassenen Durchtrittslücke (35) für die Lagerkonsole (7) und den Ketten- oder Riementrieb (8) haben.

11. Maschine nach Anspruch 10,
**dadurch gekennzeichnet,**
**daß** die unteren Abschnitte (16) der Halteringe (10) bzw. die sich ergänzenden Ringhälften (11) mit ihren Innenseiten (36) unterhalb der durch die unteren Scheitellinien der Vorschubrollen (3) hindurchgehenden Ebene liegen und bis an die Lagerkonsole (7) heranreichen.

12. Maschine nach einem der Ansprüche 1 bis 11,
**dadurch gekennzeichnet,**
**daß** die Halteringe (10) bzw. die sich ergänzenden Ringhälften (11) eine ovale Grundform mit einer quer zur Vorschubrichtung liegenden Längsachse haben.

13. Maschine nach einem der Ansprüche 10 bis 12 ,
**dadurch gekennzeichnet,**
**daß** an der Lagerkonsole (7) unterschiedlich lange Wellen (5) auswechselbar angeordnet und/oder daran verschieden breite oder mehrere Vorschubrollen (3) anbringbar sind.

14. Maschine nach Anspruch 13,
**dadurch gekennzeichnet,**
**daß** die Wellen (5) an der Lagerkonsole (7) ein- oder beidseitig vorkragend lagerbar sind.

## Claims

1. Machine for covering elongated workpieces (4) such as boards, strips, panels or the like, with a band-like coating material such as a foil or a veneer, with a feed device (2) supporting the workpieces and moving same in their longitudinal direction and surrounded at least along a straight line section by one or more retaining rings (10) arranged in succession in the feed direction wherein the rings are each located in planes perpendicular to the feed direction and have inwardly projecting retaining arms (15) with contact pressure rollers (14) mounted thereon for guiding and/or pressing the coating material onto the workpiece which is entrained as the workpiece runs through the retaining rings,
**characterised in that**,
the retaining rings (10) are arranged displaceable in the feed direction of the work pieces (4).

2. Machine according to claim 1,
**characterised in that**,
the retaining rings (10) are mounted on supports (18) which are displaceable and lockable on a rail (19) parallel to the feed direction (2).

3. Machine according to claim 2,
**characterised in that**,
the retaining rings (10) are each formed from mirror symmetrical ring halves (11) which are each mounted per se on a support (18).

4. Machine according to claim 3,
**characterised in that**,
each support (18) has on its top side a cross guide (21) for holding an underneath tension section (17) on the ring halves (11) in a clamping and releasable manner.

5. Machine according to one of claims 2 to 4,
**characterised in that**,
a scale (24) with measured markings is provided parallel next to the rail (19) for the supports (18) and the supports (18) have position indicators (25) aligned therewith.

6. Machine according to one of claims 3 to 5,
**characterised in that**,
the ring halves (11) of the retaining rings (10) have at their seam points between the upper sections (26) a locking device (27) for securing the ring halves (11) relative to each other.

7. Machine according to claim 6,
**characterised in that**,
the locking device (27) of the ring halves has protruding claws (28) which have contours (29) which positively engage in each other in the locking position and whose positive locking connection acts in the feed direction.

8. Machine according to claim 6 or 7,
**characterised in that**,
above the ring halves (11) there is a tension device (30, 31) which presses the claws (28) towards each other in the locking position.

9. Machine according to claim 8,
**characterised in that**,
the tension device (30, 31) of the locking device (27) has tension rails which are movable relative to each other and which bias the claws (28) in the locking position and which extend over several or all successive retaining rings (10).

10. Machine according to one of claims 1 to 9,
**characterised in that**,
the feed device (2) consists of successive feed rollers (3) in the feed direction which are each mounted on a shaft (5) lying transversely to the feed direction and mounted on a bearing console (7) which is mounted on the centre plane extending through the retaining rings (10) and in the region of which has a drive wheel (6) which is coupled by a chain or belt drive (8) to a central drive (9) whereby the retaining rings (10) or ring halves (11) have lower sections (16) with a through gap (35) left between same for the bearing console (7) and the chain or belt drive (8).

11. Machine according to claim 10,
**characterised in that**,
the lower sections (16) of the retaining rings (10) or the complementing ring halves (11) lie with their insides (36) underneath the plane passing through the lower apices of the feed rollers (3) and extend up to the bearing console (7).

12. Machine according to one of claims 1 to 11,
**characterised in that**,
the retaining rings (10) or the complementing ring halves (11) have a basic oval shape with a longitudinal axis lying transverse to the feed direction.

13. Machine according to one of claims 10 to 12,
**characterised in that**,
different length shafts (5) are mounted interchangeable on the bearing console and/or different width or several feed rollers (3) can be fitted.

14. Machine according to claim 13,
**characterised in that**,
the shafts (5) can be mounted on the bearing console (7) to protrude on one or both sides.

## Revendications

1. Machine pour le revêtement de pièces à usiner allongées (4), tels que baguettes, planches, panneaux ou pièces analogues, avec une matière de revêtement en forme de ruban, comme feuille ou contreplaqué, avec un dispositif d'avance (2) qui, portant lesdites pièces à usiner et les transportant dans leur sens longitudinal, est entouré, au moins le long d'un secteur en ligne droite, de plusieurs ou de nombreuses bagues de maintien (10), disposées les unes derrière les autres, dans le sens d'avance, dont les plans respectifs sont perpendiculaires au sens d'avance et sur lesquelles des bras de maintien (15) font saillie vers l'intérieur, avec des galets de pressions y montés (14) pour amener et /ou presser, sur les pièces à usiner, la matière de revêtement qui est entraînée par lesdites pièces à usiner passant à travers les bagues de maintien,
**caractérisée en ce que**
les bagues de maintien (10) sont disposées, déplaçables, dans le sens d'avance des pièces a usiner (4).

2. Machine selon la revendication 1,
**caractérisée en ce que**
les bagues de maintien (10) sont disposées sur des supports (18) qui peuvent être déplacés sur un rail (19) parallèle au sens d'avance ainsi que bloqués contre celui-ci.

3. Machine selon la revendication 2,
**caractérisée en ce que**
les bagues de maintien (10) consistent chacune en des moitiés de bagues (11), orientées face à face, lesquelles sont disposées chacune sur un support (18).

4. Machine selon la revendication 3,
**caractérisée en ce que**
chaque support (18) est pourvu, sur sa face supérieure, d'un guidage de réception transversal (21) dans lequel pour accueillir un secteur inférieur (17) des moitiés de bagues (11), qui y est serré ou desserré.

5. Machine selon l'une des revendications 2 à 4,
**caractérisée en ce que**,
parallèlement au rail (19), prévu pour les supports (18), et à côté de celui-ci, une règle graduée (24), pourvue de marques de mesure est disposée et que les supports (18) présentent des indicateurs de position (25) pointés sur ladite règle graduée.

6. Machine selon l'une des revendications 3 à 5,
**caractérisée en ce que**
les moitiés de bagues (11), formant les bagues de maintien (10), présentent, au point de jonction de leur secteur supérieur (26), un dispositif de verrouillage (27) pour les sécuriser par rapport l'une à l'autre.

7. Machine selon la revendication 6,
**caractérisée en ce que**
le dispositif de verrouillage (27) des moitiés de bagues (11) présente des griffes (28) en saillie dont les contours (29) entrent en prise l'un avec l'autre, en position de verrouillage, formant un engagement géométrique, actif dans le sens d'avance.

8. Machine selon la revendication 6 ou 7,
**caractérisée en ce que**,
au-dessus des moitiés de bagues (11), un dispositif de serrage (30, 31) est disposé, lequel presse leurs griffes (28) l'une contre l'autre, en position de verrouillage.

9. Machine selon la revendication 8,
**caractérisée en ce que**
le dispositif de serrage (3G, 31) du dispositif de verrouillage (27) possède des rails de serrage relativement mobiles l'une vers l'autre, agissant sur les griffes (28), en position de verrouillage, et s'étendant à plusieurs ou à toutes les bagues de maintien (10), disposées les unes derrière les autres.

10. Machine selon l'une des revendications 1 à 9,
**caractérisée en ce que**
le dispositif d'avance (2) consiste en des galets d'avance (3), disposés les uns derrière les autres dans le sens d'avance, lesquels sont respectivement installés sur un arbre (5) qui, orienté transversalement par rapport au sens d'avance, est monté, sur le plan médian passant à travers les bagues de maintien (10), sur une console de montage (7), dans le secteur de laquelle il est équipé d'une roue motrice (6) qui est couplée avec une commande centrale (9), à l'aide d'un entraînement par chaîne ou par courroie (8), les bagues de maintien (10) resp. les moitiés de bagues (11) présentant des secteurs inférieurs (16) avec, entre eux, un espace libre (35) pour le passage de la console de montage (7) et de l'entraînement à chaîne ou à courroie (8).

11. Machine selon la revendication 10,
**caractérisée en ce que**
les secteurs inférieurs (16) des bagues de maintien (10) resp. des moitiés de bagues (11) sont situés, avec leurs surfaces intérieures (36), au-dessous du plan qui traversent les lignes de sommet inférieures des galets d'avance (3) et parviennent jusqu'à la console de montage (7).

12. Machine selon l'une des revendications 1 à 11,
**caractérisée en ce que**
les bagues de maintien (10) resp. les moitiés de bagues (11) se complétant ont une forme fondamentale ovale, avec un axe longitudinal disposé transversalement par rapport au sens d'avance.

13. Machine selon l'une des revendications 10 à 12,
**caractérisée en ce que**
des arbres (5) de différentes longueurs sont disposés, interchangeables, sur la console de montage (7) et / ou que des galets de différentes largeurs, ou plusieurs galets d'avance (3) peuvent y être installés.

14. Machine selon la revendication 3,
**caractérisée en ce que**
les arbres (5) peuvent être montés sur la console (7) en faisant saillie monolatéralement ou bilatéralement.
